# EUROPEAN PATENT APPLICATION

(11) **EP 2 518 917 A1**
(43) Date of publication of application: **31.10.2012**
(21) Application number: 11187232.1
(22) Date of filing: 31.10.2011
(51) Int. Cl.: H04H 60/45, H04N 21/4223

(54) **Video display apparatus and video display method**

(30) Priority: 27.04.2011 JP 2011099646
(71) Applicant: Kabushiki Kaisha Toshiba, Tokyo 105-8001 (JP)
(72) Inventor: Kimura, Takahiro, Tokyo, 105-8001 (JP)
(74) Representative: Henkel, Breuer & Partner

(57) **Abstract**

One embodiment provides a video display apparatus including: a storage module configured to store: registered accounts; registered operation mode settings; and registered face image; a capturing module configured to capture a face image for a currently-viewinguser; a judging module configured to judge whether or not the currently-viewing user corresponds to any of the registered accounts by comparing the captured face image with the registered face images; a display controller configured to display a confirmation image for confirming whether a current operation mode setting of the video display apparatus should be changed if the currently-viewinguser corresponds to any of the registered accounts; and a setting module configured to change the current operation mode setting into one of the registered operation mode settings, based on the judgment result.

## Description

### CROSS-REFERENCE TO RELATED APPLICATION(S)

This application claims priority from Japanese Patent Application No. 2011-099646 filed on April 27, 2011, the entire contents of which are incorporated herein by reference.

### FIELD

Embodiments described herein relate generally to a video display apparatus and a video display method.

### BACKGROUND

There is proposed a digital TV receiver (video display apparatus) configured to store sets of operation mode settings (relating to sound volume, image quality, and a recorded program list) that are customized for respective user and allow each user to select his or her stored settings. For example, in JP-2007-228385, sound pressure levels are registered for respective users together with captured images (face images) of their faces so that the sound pressure is set to the registered level when the user views the digital TV receiver.

However, in JP-2007-228385, complicated manipulations are required to use such customized operation mode settings, and it is inconvenient to the users.

### BRIEF DESCRIPTION OF DRAWINGS

A general architecture that implements the various features of the present invention will now be described with reference to the drawings. The drawings and the associated descriptions are provided to illustrate embodiments and not to limit the scope of the present invention.
Fig. 1 illustrates a system configuration of a video display apparatus according to an embodiment.
Fig. 2 illustrates a process executed in the video display apparatus.
Fig. 3 illustrates a face image registration process executed in the video display apparatus.
Fig. 4 illustrates an example face image displayed on a video display unit.
Fig. 5 illustrates a face image deletion process executed in the video display apparatus.
Fig. 6 illustrates example face images displayed on the video display unit.
Fig. 7 illustrates a user recognition process executed in the video display apparatus.
Figs. 8A and 8B illustrate example images displayed on the video display unit.

### DETAILED DESCRIPTION

In general, one embodiment provides a video display apparatus including: a storage module configured to store: a plurality of registered accounts; a plurality of registered operation mode settings correlated with the registered accounts, respectively; and a plurality of registered face images correlated with the registered accounts, respectively; a capturing module configured to capture a face image for a currently-viewing user; a judging module configured to judge whether or not the currently-viewing user corresponds to any of the registered accounts by comparing the captured face image with the registered face images; a display controller configured to display a confirmation image for confirming whether a current operation mode setting of the video display apparatus should be changed if the judging module judges that the currently-viewing user corresponds to any of the registered accounts; and a setting module configured to change the current operation mode setting into one of the registered operation mode settings corresponding to the registered account that has been judged as corresponding to the currently-viewing user.

### [Embodiment]

An embodiment will be described with reference to the drawings.

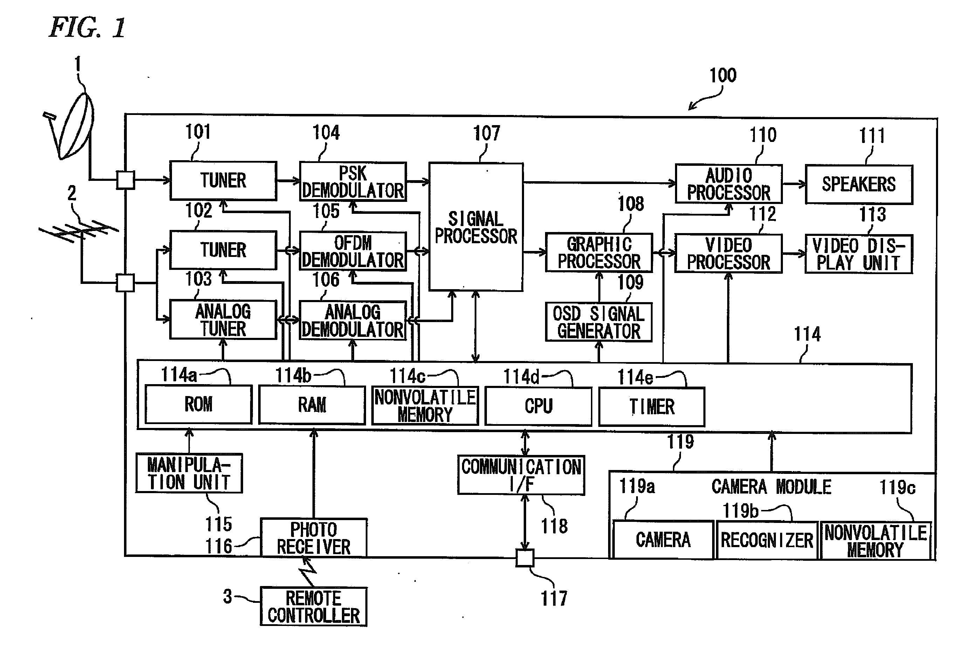

Fig. 1 illustrates a system configuration of a video display apparatus 100, such as a digital TV receiver, according to the embodiment. First, the video display apparatus 100 according to the embodiment will be outlined below.

The video display apparatus 100 according to the embodiment allows each user to form a user account (hereinafter referred simply as an account) and to store desired environment settings. The environment settings include setting values of sound volume, image quality, brightness, etc. of the video display apparatus 100 and a password that is set by a user. The video display apparatus 100 according to the embodiment stores preset environment settings. Each user can switch between an operation mode (special mode) of customized environment settings and an operation mode (normal mode) of the preset environment settings and use the selected operation mode.

### (Configuration of video display apparatus 100)

The video display apparatus 100 according to the embodiment is equipped with tuners 101-103, a PSK (phase shift keying) demodulator 104, an OFDM (orthogonal frequency division multiplexing) demodulator 105, an analog demodulator 106, a signal processor 107, a graphic processor 108, an OSD (on-screen display) signal generator 109, an audio processor 110, speakers 111, a video processor 112, a video display unit 113, a controller 114 (storage module, display controller, setting module, registering module, deleting module), a manipulation unit 115 (receiving module), a photo receiver 116 (receiving module), terminals 117, a communication interface (I/F) 118, and a camera module 119 (capturing module, judging module, measuring module).

The tuner 101 tunes into a digital broadcast signal on a desired channel according to a control signal supplied from the controller 114 among satellite digital TV broadcast signals received by a BS/CS digital broadcast receiving antenna 1, and outputs the selected digital broadcast signal to the PSK demodulator 104. The PSK demodulator 104 demodulates the digital broadcast signal supplied from the tuner 101 according to a control signal supplied from the controller 114, and outputs a demodulated broadcast signal to the signal processor 107.

The tuner 102 tunes into a digital broadcast signal on a desired channel according to a control signal supplied from the controller 114 among ground-wave digital TV broadcast signals received by a ground-wave broadcast receiving antenna 2, and outputs the selected digital broadcast signal to the OFDM demodulator 105. The OFDM demodulator 105 demodulates the digital broadcast signal supplied from the tuner 102 according to a control signal supplied from the controller 114, and outputs a demodulated broadcast signal to the signal processor 107.

The analog tuner 103 tunes into an analog broadcast signal on a desired channel according to a control signal supplied from the controller 114 among ground-wave analog TV broadcast signals received by the ground-wave broadcast receiving antenna 2, and outputs the selected analog broadcast signal to the analog demodulator 106. The analog demodulator 106 demodulates the analog broadcast signal supplied from the analog tuner 103 according to a control signal supplied from the controller 114, and outputs a demodulated broadcast signal to the signal processor 107.

The signal processor 107 generates a video signal and an audio signal from the demodulated broadcast signals that are input from the PSK demodulator 104, the OFDM demodulator 105, and the analog demodulator 106. The signal processor 107 outputs the generated video signal and audio signal to the graphic processor 108 and the audio processor 110, respectively.

The OSD signal generator 109 generates an OSD signal according to a control signal supplied from the controller 114, and outputs the generated OSD signal to the graphic processor 108.

The graphic processor 108 outputs, to the video processor 112, the video signal supplied from the signal processor 107 and the OSD signal generated by the OSD signal generator 109. The video processor 112 converts the received video signal and OSD signal, for example, into a signal having such a format as to be displayable by the video display unit 113, and outputs the latter signal to the video display unit 113 to cause it to display video.

The audio processor 110 converts the received audio signal into signals having such a format as to be reproducible by the speakers 111, and outputs the latter signals to the speakers 111 to cause them to reproduce a sound.

Plural manipulation keys (cursor key, enter key, back key, registration key, color keys (red, green, yellow, and blue), etc.) for manipulating the video display apparatus 100 are arranged on the manipulation unit 115. A user can cause a desired operation such as viewing channel switching or registration of a captured image (face image) of the user's face by manipulating the manipulation keys of the manipulation unit 115. When a manipulation key is manipulated, the manipulation unit 115 outputs a corresponding manipulation signal to the controller 114.

The photo receiver 116 receives an infrared signal that is transmitted from a remote controller 3, and outputs a manipulation signal corresponding to the received infrared signal to the controller 114. Plural manipulation keys (cursor key, enter key, back key, registration key, color keys (red, green, yellow, and blue), etc.) are arranged on the remote controller 3. When a user makes a desired manipulation by pressing a manipulation key, the remote controller 3 emits a corresponding infrared signal.

The terminals 117 are a USB terminal, a LAN terminal, an HDMI terminal, an i.LINK terminal, etc. for connection of an external device or apparatus (e.g., USB memory, DVD recording/reproducing apparatus, Internet server, or a PC).

The communication I/F 118, which is a communication I/F for communication with an external device or apparatus connected to one of the terminals 117, performs format conversion of controls signal, data, etc. that are exchanged between the controller 114 and the external device or apparatus.

The camera module 119 is equipped with a camera 19a for capturing what is located in front of the video display apparatus 100, a recognizer 119b for recognizing the face of a user based on the captured image, and a nonvolatile memory 119c for storing the image such that it is correlated with an identifier (user ID) that is unique to the user if the face can be recognized.

The camera module 119 captures what is located in front of the video display apparatus 100 at prescribed intervals. If recognizing the face of a user in an image taken, the camera module 119 compares feature points of the face included in the image with feature points of each of face images stored in the nonvolatile memory 119c and outputs a coincidence-found user ID to the controller 114.

The controller 114 is equipped with a ROM (read-only memory) 114a, a RAM (random access memory) 114b, a nonvolatile memory 114c, a CPU 114d, and a timer 114e. The ROM 114a stores control programs to be run by the CPU 114d. The RAM 114b functions as a work area of the CPU 114d. The nonvolatile memory 114c stores various kinds of setting information, control information, etc. The timer 114e measures time.

The nonvolatile memory 114c also stores user face images that were taken by the camera module 119. Furthermore, the nonvolatile memory 114c stores environment settings for a normal mode and sets of user-customized environment settings for special modes. The user face images and the sets of user-customized environment settings are stored so as to be correlated with respective user IDs. That is, in the video display apparatus 100 according to the embodiment, each user can make desired environment settings.

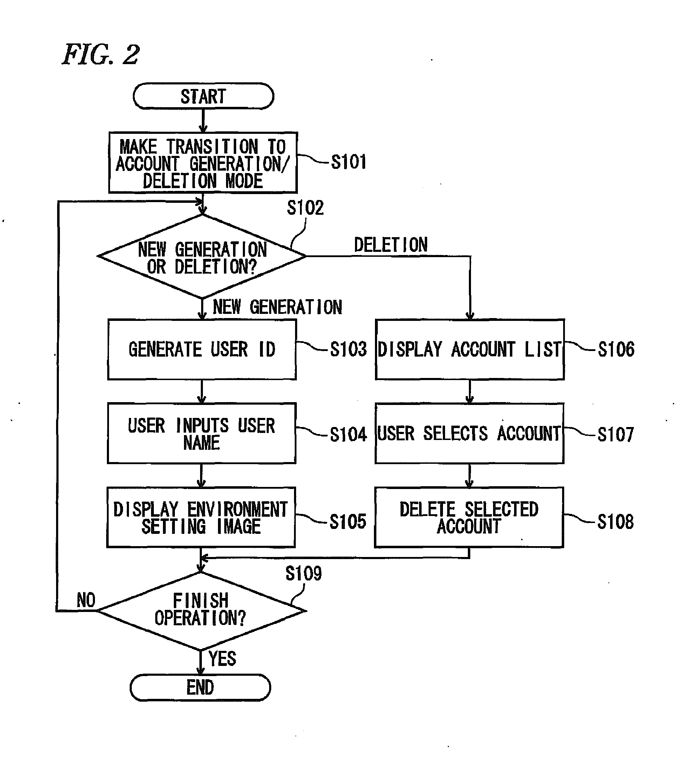

The controller 114 controls the entire video display apparatus 100, for example, so as to perform an operation corresponding to a manipulation signal that is input from the manipulation unit 115 or the photo receiver 116. The controller 114 instructs the OSD signal generator 109 so that a face image that is correlated with a user ID that is input from the camera module is displayed. Detailed operations of the controller 114 will be described with reference to Figs. 2-8.

### (Account generation/deletion process)

Fig. 2 illustrates a process executed in the video display apparatus 100 in generating or deleting an account. The account generation/deletion process will be described below with reference to Figs. 1 and 2. Although the following description assumes that a user manipulates the remote controller 3, the user may manipulate the manipulation unit 115 instead.

What a user selects an account generation/deletion mode by manipulating the remote controller 3, at step S101 the video display apparatus 100 makes a transition to the account generation/deletion mode. The controller 114 OSD-displays a "New generation" box and a "Deletion" box on the video display unit 113.

At step S102, the user selects "New generation" or "Deletion" by manipulating the remote controller 3. If "New generation" is selected, at step S103 the controller 114 generates a new account and assigns a newly generated user ID to the account.

Then, the controller 114 OSD-displays an image for urging the user to input a user name. If the user input a user name (e.g., "A") as an account name by manipulating the remote controller 3 at step S104, the controller 114 stores, in the nonvolatile memory 114c, the account name and the user ID generated at step S103 such that they are correlated with each other.

At step S105, the controller 114 OSD-displays an environment setting image on the video display unit 113. Various setting items (e.g., volume, image quality and brightness of the video display apparatus 100, a password, etc.) of an operation environment of the video display apparatus 100 are displayed in the environment setting image and the user makes settings for those items by manipulating the remote controller 3. The controller 114 stores the settings of the respective items in the nonvolatile memory 114c such that they are correlated with the user ID that was generated at step S103.

If "Deletion" is selected at step S102, at step S106 the controller 114 OSD-displays a list of currently registered accounts on the video display unit 113. At step S107, the user selects, from the account list, an account he or she wants to delete. At step S108, the controller 114 deletes the account selected by the user.

At step S109, the controller 114 OSD-displays boxes of "Finish the operation?," "Yes," and "No" on the video display unit 113. The user selects "Yes" or "No" by manipulating the remote controller 3. If the user selects "Yes" at step S109, the controller 114 finishes the account generation/deletion process. If the user selects "No" at step S109, the controller 114 causes the process to return to step S102.

### (Face image registration process)

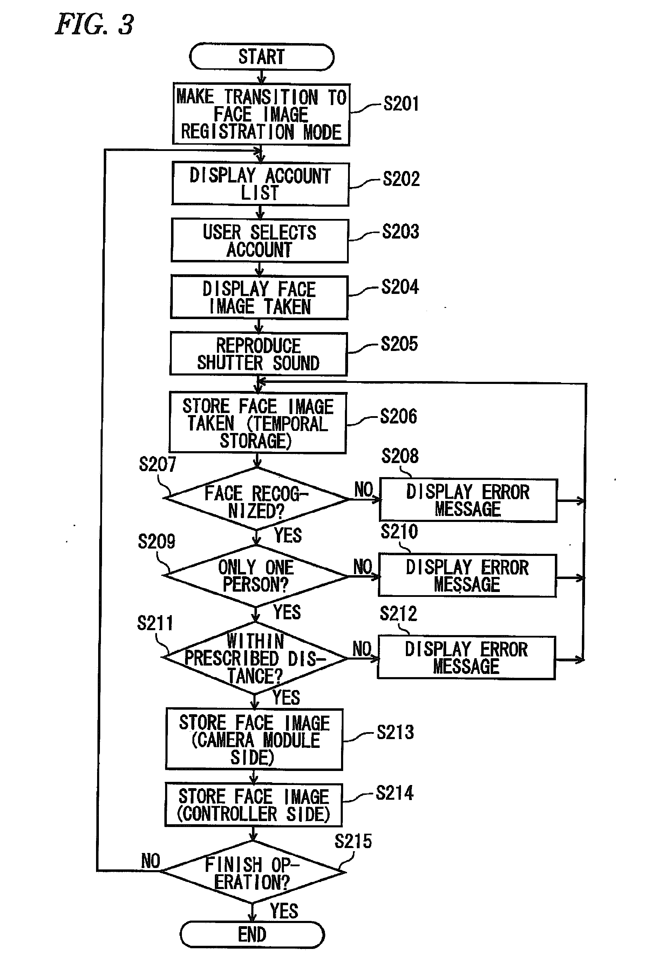

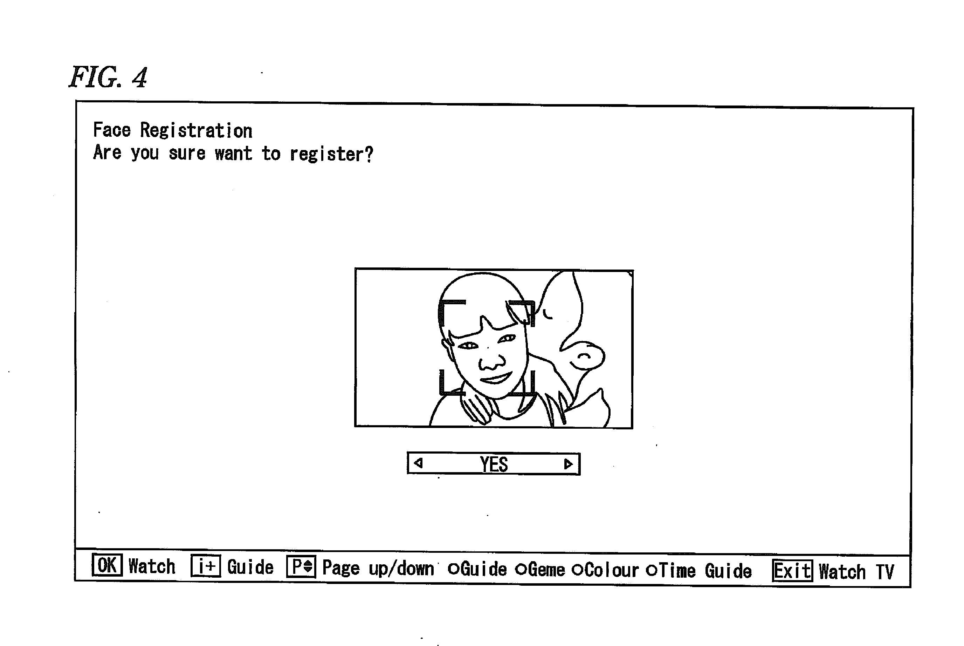

Fig. 3 illustrates a user face image registration process executed in the video display apparatus 100. Fig. 4 illustrates an example face image that is displayed on the video display unit 113 in registering a user face image. The face image registration process will be described below with reference to Figs. 1, 3, and 4. Although the following description assumes that a user manipulates the remote controller 3, the user may manipulate the manipulation unit 115 instead.

If a user selects a face image registration mode by manipulating the remote controller 3, at step S201 the video display apparatus 100 makes a transition to the face image registration mode. At step S202, the controller 114 OSD-displays an image (including a list of accounts) for selection of an account on the video display unit 113. At step S203, the user selects an account in which a face image should be registered additionally from the account list displayed on the video display unit 113 by manipulating the remote controller 3.

At step S204, the controller 114 instructs the camera module 119 to send it a face image being taken by the camera 119a and displays the face image received from the camera module 119 on the video display unit 113. Fig. 4 illustrates an example face image displayed on the video display unit 113.

The user determines a face image to be registered while checking the face image being displayed on the video display unit 113. If the user presses the enter key of the remote controller 3, the controller 114 instructs the audio processor 110 to reproduce a shutter sound, whereupon the shutter sound is reproduced by the speakers 111 at step S205.

The controller 114 instructs the camera module 119 to store the face image just taken by the camera 119a in the nonvolatile memory 119c (temporal storage). At step S206, the camera module 119 stores the face image just taken by the camera 119a in the nonvolatile memory 119c. At step S207, the recognizer 119b of the camera module 119 attempts to recognize a user face from the face image stored temporarily.

If the recognizer 119b cannot recognize a face (S207: no), the camera module 119 sends the controller 114 a message to the effect that a face cannot be recognized. At step S208, the controller 114 OSD-displays, on the video display unit 113, an error message to the effect that a face cannot be recognized. The face image stored in the nonvolatile memory 119c temporarily is erased.

If succeeding in recognizing a face (S207: yes), at step S209 the recognizer 119b judges whether the face of only one person is recognized in the face image. If the faces of two or more persons are recognized in the face image (S209: no), the camera module 119 sends a message to the effect that the faces of two or more persons are being recognized. At step S210, OSD-displays, on the video display unit 113, an error message to the effect that the faces of two or more persons are being recognized. The face image stored in the nonvolatile memory 119c temporarily is erased.

If succeeding in recognizing the face of only one person (S209: yes), the recognizer 119b calculates a distance between the camera module 119 and the user based on the size and features (e.g., the distance between the eyebrows and the distance between the nose and the eyebrows) of the recognized face. At step S211, the recognizer 119b judges whether the calculated distance between the camera module 119 and the user is within a prescribed distance (e.g., 5 m).

If the calculated distance is longer than the prescribed distance (S211: no), the camera module 119 sends the controller 114 a message to the effect that the distance between the camera module 119 and the user is longer than the prescribed distance. At step S212, the controller 114 OSD-displays, on the video display unit 113, a message to the effect that the distance between the camera module 119 and the user is longer than the prescribed distance. The face image stored in the nonvolatile memory 119c temporarily is erased.

If the calculated distance between the camera module 119 and the user is within the prescribed distance (S211: yes), the camera module 119 instructs the controller 114 to send it the user ID that is correlated with the account that was selected at step S203. The camera module 119 sends the face image stored in the nonvolatile memory 119c temporarily to the controller 114.

At step S213, the camera module 119 stores, in the nonvolatile memory 119c, the face image stored therein temporarily and the user ID sent from the controller 114 such that they are correlated with each other. At step S214, the controller 114 assigns the user ID that is correlated with the account selected at step S203 to the face image sent from the camera module 119 and stores them in the nonvolatile memory 114c.

At step S215, the controller 114 OSD-displays boxes of "Finish the operation?," "Yes," and "No" on the video display unit 113. The user selects "Yes" or "No" by manipulating the remote controller 3. If the user selects "Yes" at step S215, the controller 114 finishes the face image registration process. If the user selects "No" at step S215, the controller 114 causes the process to return to step S202.

### (Face image deletion process)

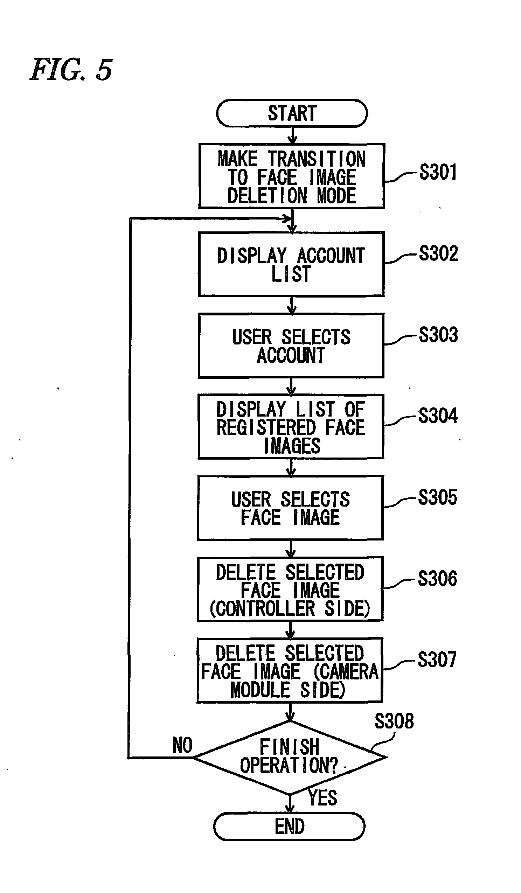

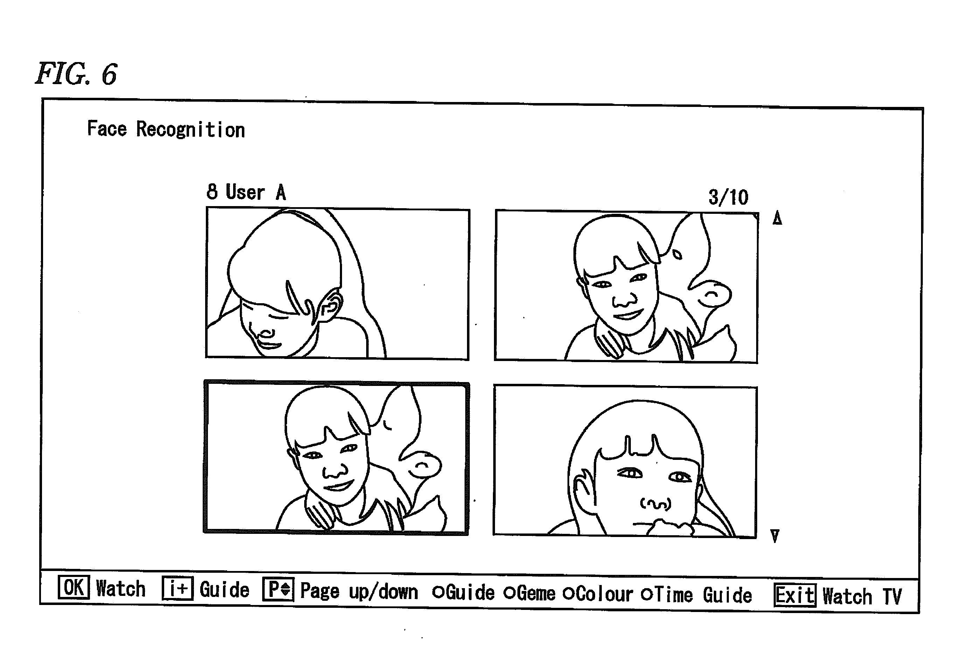

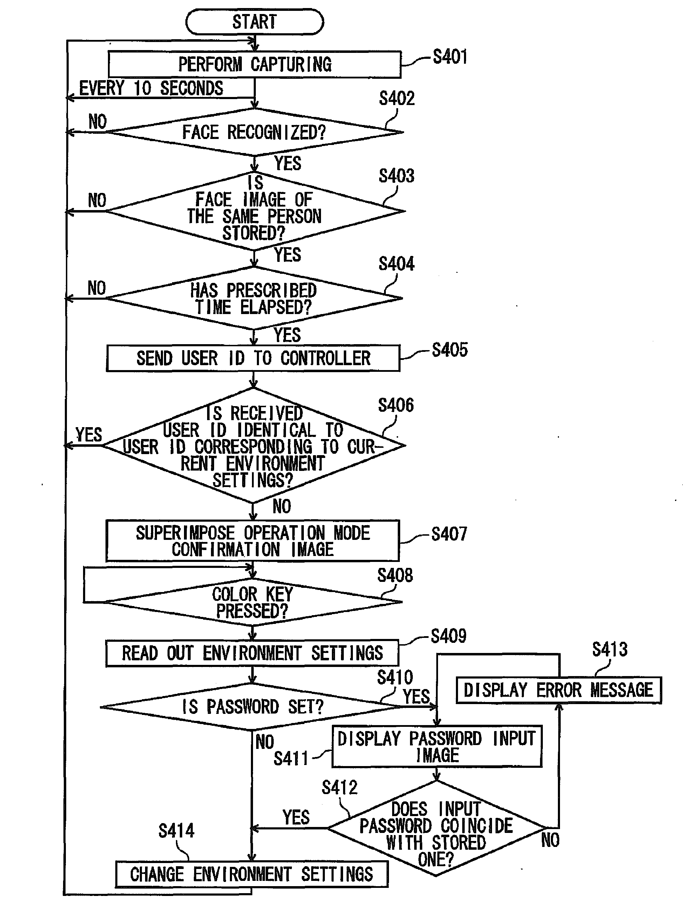

Fig. 5 illustrates a face image deletion process executed in the video display apparatus 100. Fig. 6 illustrates example face images that are displayed on the video display unit 113 in deleting a user face image. The face image deletion process will be described below with reference to Figs. 1, 5, and 6. Although the following description assumes that a user manipulates the remote controller 3, the user may manipulate the manipulation unit 115 instead.

If a user selects a face image deletion mode by manipulating the remote controller 3, at step S301 the video display apparatus 100 makes a transition to the face image deletion mode. At step S302, the controller 114 OSD-displays a list of currently registered accounts on the video display unit 113. At step S303, the user selects an account from which the face image should be deleted from the account list by manipulating the remote controller 3.

At step S304, the controller 114 displays, on the video display unit 113, a list of registered face images that are stored in the nonvolatile memory 114c so as to be correlated with the user ID of the account selected by the user.

Fig. 6 shows a list of registered face images displayed on the video display unit 113. At step S305, the user selects a face image he or she wants to delete from the face image list shown in Fig. 6. At step S306, the controller 114 erases the face image selected by the user from the nonvolatile memory 114c.

Since the same face image is also stored in the nonvolatile memory 119c of the camera module 119, the controller 114 instructs the camera module 119 to delete the same face image that is stored in the nonvolatile memory 119c. At step S307, the camera module 119 erases, from the nonvolatile memory 119c, the face image corresponding to the face image that has been deleted by the controller 114.

At step S308, the controller 114 OSD-displays boxes of "Finish the operation?," "Yes," and "No" on the video display unit 113. The user selects "Yes" or "No" by manipulating the cursor key and the enter key of the remote controller 3. If the user selects "Yes" at step S308, the controller 114 finishes the face image deletion process. If the user selects "No" at step S308, the controller 114 causes the process to return to step S302.

### (User recognition process)

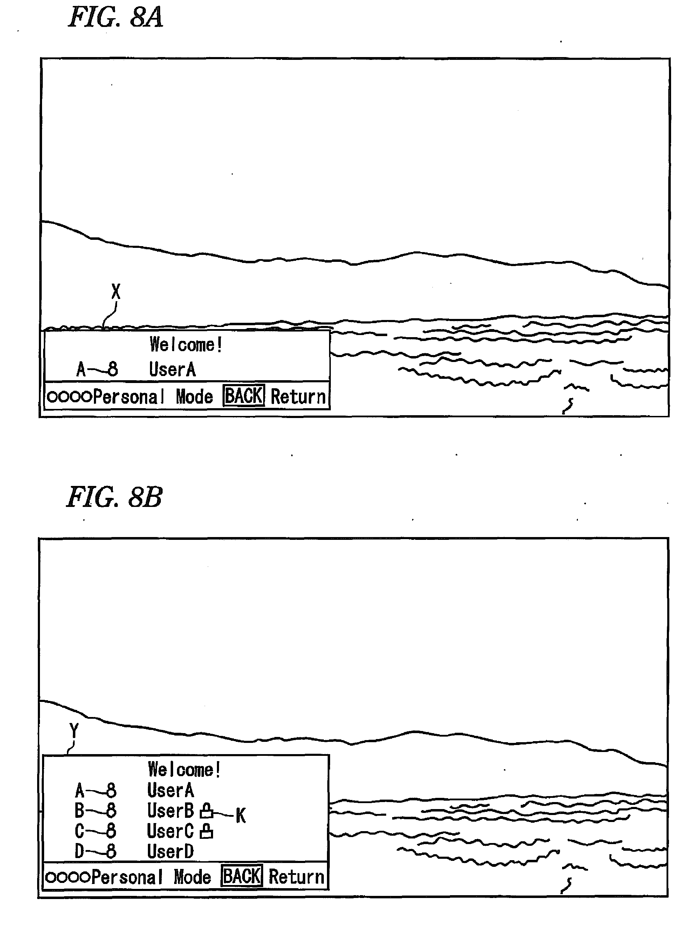

Fig. 7 illustrates a user recognition process executed in the video display apparatus 100. Figs. 8A and 8B illustrate example images that are displayed on the video display unit 113 when a user(s) is recognized. The user recognition process will be described below with reference to Figs. 1, 7, 8A, and 8B. Although the following description assumes that a user manipulates the remote controller 3, the user may manipulate the manipulation unit 115 instead.

At step S401, the camera module 119 captures what is located in front of the video display apparatus 100 regularly (e.g., every 10 seconds) with the camera 119a. At step S402, the recognizer 119b attempts to recognize a face(s) included in an image taken. If no face is recognized in the image taken (S402: no), the camera module 119 causes the process to return to step S401.

If succeeding in recognizing a face in the image taken (S402: yes), at step S403 the recognizer 119b compares the recognized face with face images stored in the nonvolatile memory 119c and thereby judges whether or not a face image of the same person is stored in the nonvolatile memory 119c.

This judgment is made by comparing feature points of the face image of the recognized face with feature points of each of face images of all accounts stored in the nonvolatile memory 119c.

If the similarity between sets of feature points is higher than a prescribed threshold value, the face image concerned that is stored in the nonvolatile memory 119c is judged as a face image of the same person. If there are plural face images with each of which the similarity between sets of feature points is higher than the prescribed threshold value, the face image that is highest in similarity is judged as a face image of the same person. If there is no face image with which the similarity between sets of feature points is higher than the prescribed threshold value, it is judged that no face image of the same person is stored.

If no face image of the same person is stored (S403: no), the camera module 119 causes the process to return to step S401. If a face image of the same person is stored (S403: yes), at step S404 the camera module 119 judges whether or not a prescribed time (e.g., 30 seconds) has elapsed from preceding recognition of the user recognized this time. This judgment is made by using a time that is measured by the timer 114e of the controller 114.

If the prescribed time has not elapsed yet (S404: no), the camera module 119 causes the process to return to step S401. If the prescribed time has elapsed (S404: yes), at step S405 the camera module 119 sends the controller 114 the user ID that is correlated with the face image that is stored in the nonvolatile memory 119c and was recognized as a face image of the same person.

If images for confirmation of operation mode switching (described later with reference to Figs. 8A and 8B) are displayed on the video display unit 113 successively in a prescribed time, a user may feel annoying. In the embodiment, a new image for confirmation of operation mode switching is not displayed on the video display unit 113 if a prescribed time has not elapsed yet from preceding display of an image for confirmation of operation mode switching. This measure prevents the user from feeling annoying when such confirmation images are displayed on the video display unit 113 many times.

When receiving the user ID from the camera module 119, at step S406 the controller 114 judges whether or not the user ID that is correlated with the current environment settings is the same as the user ID received from the camera module 119. If the two user IDs are the same (S406: yes), the controller 114 causes the process to return to step S401.

If the video display apparatus 100 has already made a transition to operation mode settings of a user who has been recognized this time, it is not necessary to make a new transition. In the embodiment, an image for confirmation of operation mode switching (described later with reference to Figs. 8A and 8B) is not displayed on the video display unit 113 if operation mode settings of a user who has been recognized this time are already established in the video display apparatus 100. This measure prevents the user from feeling annoying.

If the two user IDs are not identical (S406: no), at step S407 the controller 114 OSD-displays an image for confirmation of operation mode switching on the video display unit 113 such that it is superimposed on video that is currently displayed on the video display unit 113.

Upon displaying the operation mode switching confirmation image, the controller 114 starts time measurement with the timer 114e. This time measurement is performed for each user for whom it was judged at step S403 that a face image of the same person was stored in the nonvolatile memory 119c. Measured times will be used for the judgment of step S404.

Figs. 8A and 8B illustrate example images that are displayed on the video display unit 113 when a user face(s) is recognized. Different operation mode switching images are displayed depending on the number of users recognized. For example, if only one user was recognized at step S402, a frame X shown in Fig. 8A is displayed on the video display unit 113 so as to be superimposed on video. If plural users were recognized at step S402, a frame Y shown in Fig. 8B is displayed on the video display unit 113 so as to be superimposed on video.

As shown in Fig. 8A, an icon A and a registration name "UserA" of the recognized user are displayed in the frame X. As shown in Fig. 8B, icons A-D and registration names "UserA," "UserB," "UserC," and "UserD" of the respective recognized users are displayed in the frame Y The icons A-D are colored in ref, green, yellow, and blue, respectively. If a password is set for the account of a user, an icon K indicating that fact is displayed on the right of his or her user name.

At step S408, the user determines whether to make a transition to a special mode of his or her account by manipulating the remote controller 3. More specifically, the user presses the color key corresponding to an account a special mode of which a transition should be made to. For example, if the user wants to make a transition to a special mode of the account of "UserA," the user presses the red color key

If a color key is pressed, at step S409 the controller 114 reads, from the nonvolatile memory 114c, the environment settings corresponding to the user ID that is correlated with the pressed color key. At step S410, the controller 114 judges whether or not a password is set for the read-out environment settings.

Although in the embodiment the color keys of the remote controller 3 are used for causing transitions to special modes of the respective accounts, other manipulation keys may be used for those purposes. In the latter case, it is preferable to display manipulation keys that are assigned to respective accounts.

If a password is set (S410: yes), at step S411 the controller114 OSD-displays an image (for example, including a message "Input a password") for urging input of a password on the video display unit 113. If the user inputs a password by manipulating the remote controller 3, at step S412 the controller 114 collates the input password with the password stored in the nonvolatile memory 114c and judges whether they coincide with each other.

If the password that has been input by the user does not coincide with the stored one (S412:no), the controller 114 OSD-displays an error message (e.g., "Wrong password")on the video display unit 113 at step S413 and causes the process to return to step S401. Further input of a password may be prohibited if the user has input a wrong password three times.

If the password that has been input by the user coincides with the stored one (S412: yes), at step S414 the controller 114 changes the environment settings of the video display apparatus 100 to the ones that are correlated with the user ID of the recognized user. Also if no password is set (S410:no), at step S414 the controller 114 changes the environment settings of the video display apparatus 100 to the ones that are correlated with the user IDof the recognized user.

In the embodiment, the environment settings (operation mode)of the video display apparatus 100 are changed to the ones that are correlated with the user ID of the recognized user after display of an image for confirmation of an operation mode change on the video display unit 113 (see Figs. 8A and 8B).Alternatively, an image indicating that the operation mode has been changed may be displayed on the video display unit 113 after the environment settings (operation mode) of the video display apparatus 100 have been changed to the ones that are correlated with the user ID of the recognized user.

As described above, according to the video display apparatus 100 of the embodiment, a user can add and delete an account by manipulating the remote controller 3 or the manipulation unit 115. Since plural face images (e.g., 10 face images) can be set for one account,face images of a user wearing and not wearing glasses, a face image taken under bright illumination, a face image taken under dark illumination (e.g., when the user is viewing a movie), and other face images may be registered. This makes it unnecessary for the user to take the trouble to take off or put on glasses or to change the brightness of illumination. The convenience of the user is thus increased.

In registering a face image of a user, a face image of the user being taken is displayed on the video display unit 113. This allows the user to check what face image will be registered. Furthermore, since a shutter sound is reproduced when a face is captured, the user can easily recognize the capturing.

Where the,faces of plural persons are included in an image taken, no face image is registered so as to prevent registration of a face image of an erroneous person. Furthermore, no face image is registered if no user face is recognized in an image taken or unless the distance between the user and the camera module 119 is within the prescribed value even if a user face is recognized. This increases the recognition percentage when a user face is to be recognized.

Since an error message is displayed on the video display unit 113 in such a manner as to depend on the capturing result, the user can recognize why a face image cannot be registered. A user can change the environment settings (user operation mode) to desired ones by a simple manipulation of pressing a color key, which is highly convenient to the user. Furthermore, a password can be set for each user operation mode, which increases the security of each user.

### [Other embodiments]

The invention is not limited to the above embodiment, and may be embodied while modifying constituent elements without departing from the spirit and scope of the invention. For example, in the process of Fig. 7, the environment settings are changed when the user presses a color key (step S408).If only one user is recognized and no password is set, the video display apparatus 100 may be configured so that the environment settings are changed without the user's pressing a color key.

Although the camera module 119 incorporated in the video display apparatus 100 is exemplified, the camera module 119 may be provided externally. In this case, the camera module 119 is connected to one of the terminals 117 of the video display apparatus 100.

## Claims

1. A video display apparatus comprising:
a storage module configured to store:
a plurality of registered accounts;
a plurality of registered operation mode settings correlated with the registered accounts, respectively; and
a plurality of registered face images correlated with the registered accounts, respectively;
a capturing module configured to capture a face image for a currently-viewing user;
a judging module configured to judge whether or not the currently-viewing user corresponds to any of the registered accounts by comparing the captured face image with the registered face images;
a display controller configured to display a confirmation image for confirming whether a current operation mode setting of the video display apparatus should be changed if the judging module judges that the currently-viewing user corresponds to any of the registered accounts; and
a setting module configured to change the current operation mode setting into one of the registered operation mode settings corresponding to the registered account that has been judged as corresponding to the currently-viewing user.

2. The apparatus of Claim 1, further comprising
a first receiving module configured to receive a manipulation made by the user,
wherein the setting module changes the current operation mode setting into one of the registered operation mode settings, according to a content of the user's manipulation received by the first receiving module.

3. The apparatus of Claim 1, further comprising
a second receiving module configured to receive a password input by the user,
wherein the storage module further stores a plurality of registered passwords correlated with the registered accounts, respectively; and
wherein the setting module changes the current operation mode setting into one of the registered operation mode settings, when the input password coincides with the registered password corresponding thereto.

4. The apparatus of Claim 1,
wherein, as long as a prescribed time has not elapsed yet from preceding display of the confirmation image, the display controller does not display another confirmation image even if the judging module judges that that the user corresponds any of the registered accounts.

5. The apparatus of Claim 1,
wherein,if the current operation mode setting is already the registered operation mode setting into which it is to be changed, the display controller does not display the confirmation image even if the judging module judges that that the user corresponds any of the registered accounts.

6. The apparatus of Claim 1, further comprising:
a registering module configured to register the captured face image into the storage module in addition to the registered face images by correlating it with a corresponding one of the registered accounts,
wherein the display controller displays the captured face image to be newly registered when the registering module performs registration.

7. The apparatus of Claim 6, further comprising
a sound output module configured to output a shutter sound when the capturing module captures the face image for the registration by the registering module.

8. The apparatus of Claim 1,
wherein one or more registered face images are correlated with each registered account.

9. The apparatus of Claim 8, further comprising
a deleting module configured to delete one of the registered face images from the storage module.

10. The apparatus of Claim 6,
wherein the display controller displays a message indicating occurrence of a registration error if plural faces are recognized or no face is recognized in the captured face image when the capturing module captures the face image for the registration by the registering module.

11. The apparatus of Claim 6, further comprising
a measuring module configured to measure a distance between the capturing module and the user based on the captured face image,
wherein, if the measured distance is longer than a prescribed distance, the registering module does not store the captured face image in the storage module.

12. A video display method for a video display apparatus, the apparatus comprising:
a storage module configured to store:
a plurality of registered accounts;
a plurality of registered operation mode settings correlated with the registered accounts, respectively; and
a plurality of face images correlated with the registered accounts, respectively, the method comprising:
capturing a face image for a currently-viewing user;
judging whether or not the currently-viewinguser corresponds to any of the registered accounts by comparing the captured face image with the registered face images;
displaying a confirmation image for confirming whether a current operation mode setting of the video display apparatus should be changed if the judging module judges that the currently-viewing user corresponds to any of the registered accounts; and
changing the current operation mode setting into one of the registered operation mode settings corresponding to the registered account that has been judged as corresponding to the currently-viewing user.
